# EUROPEAN PATENT APPLICATION

(11) **EP 2 725 482 A1**
(43) Date of publication of application: **30.04.2014**
(21) Application number: 13180526.9
(22) Date of filing: 15.08.2013
(51) Int. Cl.: G06F 3/14

(54) **Image processing apparatus and control method thereof**

(30) Priority: 29.10.2012 KR 20120120089
(71) Applicant: Samsung Electronics Co., Ltd, Gyeonggi-do 443-742 (KR)
(72) Inventor: Kim, Jung-su, Gyeonggi-do (KR); Kang, Se-hee, Seoul (KR); Eo, Ho-jin, Gyeonggi-do (KR); Jo, Se-eun, Seoul (KR)
(74) Representative: Clark, David James

(57) **Abstract**

An image processing apparatus and control method thereof are provided. The image processing apparatus includes a plurality of connectors that is connected to a plurality of display apparatuses having a predetermined resolution, an image processor that divides a source image corresponding to the number of the plurality of display apparatuses connected through the connectors, a plurality of scalers that are provided corresponding to the plurality of connectors connected to the plurality of display apparatuses, and scales a resolution of the divided source image to correspond with the resolution of the corresponding display apparatuses and a controller that transmits the plurality of adjusted source images to the plurality of display apparatuses.

## Description

### BACKGROUND

### 1. Field

Exemplary embodiments relate to an image processing apparatus and a control method thereof, and more particularly, to an image processing apparatus and a control method thereof that process a source image to be displayed on a plurality of display apparatuses without down-scaling a resolution of the source image.

### 2. Description of the Related Art

To display a high-resolution source image, e.g., a source image with UHD (Ultra High Definition) or 4K resolution, a display apparatus that supports a corresponding resolution is required. Thus, a user may need to purchase a new display apparatus displaying a high-resolution image to be able to view and enjoy the high-resolution picture quality.

### SUMMARY

Additional aspects and/or advantages will be set forth in part in the description which follows and, in part, will be apparent from the description, or may be learned by practice of the invention.

According to an exemplary embodiment an image processing apparatus and a control method thereof are provided that process a source image to be displayed on a plurality of display apparatuses supporting a lower resolution than that of a source image, without down-scaling the high-resolution source image.

The foregoing and/or other aspects may be achieved by providing an image processing apparatus comprising a plurality of connectors that are connected to a plurality of display apparatuses having a predetermined resolution, an image processor that divides a source image corresponding to a number of the plurality of display apparatuses connected through the connectors, a plurality of scalers that are provided corresponding to the plurality of connectors connected to the plurality of display apparatuses, and scales a resolution of the divided source image to correspond with the resolution of the corresponding display apparatuses; and a controller that transmits the plurality of adjusted source images to the plurality of display apparatuses.

The plurality of connectors may comprise a high definition multimedia interface (HDMI).

The controller may determine a resolution of the source image, determine the number and resolution of the plurality of display apparatuses connected through the connectors, and if the resolution of the source image is higher than those of the plurality of display apparatuses, control the image processor to divide the source image corresponding to the number of the plurality of display apparatuses.

The resolution of the source image may comprise a UHD, and a plurality of source images with scaled resolution that is transmitted to the plurality of display apparatuses comprises FHD.

The foregoing and/or other aspects may be achieved by providing a control method of an image processing apparatus comprising dividing a source image corresponding to the number and state of display apparatuses connected to a plurality of connectors, scaling a resolution of the divided image to correspond with the resolution of the plurality of connected display apparatuses, and transmitting the source image with the scaled resolution to the plurality of corresponding display apparatuses.

The control method may further comprise determining a resolution of the source image and determining the number and resolution of the display apparatuses connected to the plurality of connectors.

if the resolution of the source image is higher than those of the plurality of display apparatuses, the source image is divided corresponding to the number of the plurality of display apparatuses.

The plurality of connectors comprises a HDMI.

The control method may further comprise decoding the source image.

The foregoing and/or other aspects may be achieved by providing an image processing apparatus comprising a plurality of connectors, an image processor that divides a source image; a plurality of scalers that is provided corresponding to the plurality of connectors, and scales a resolution of the source image divided by the image processor to correspond with the resolution of display apparatuses connected through connectors, and a controller that controls the image processor to divide a source image based on the number and state of display apparatuses connected through the plurality of connectors, and transmits the source image with the scaled resolution to the plurality of display apparatuses through the plurality of connectors.

The plurality of connectors may comprise a HDMI.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of an image processing apparatus according to an exemplary embodiment;
FIGS. 2 to 4 illustrate exemplary divided source images according to an embodiment; and
FIG. 5 is a flowchart illustrating an exemplary control method of an image processing apparatus according to an embodiment.

### DETAILED DESCRIPTION

Exemplary embodiments are described in detail with reference to accompanying drawings so as to be easily realized by a person having ordinary skill in the arts. The exemplary embodiments may be embodied in various forms without being limited to the exemplary embodiments set forth herein. Descriptions of well-known parts are omitted for clarity, and like reference numerals refer to like elements throughout.

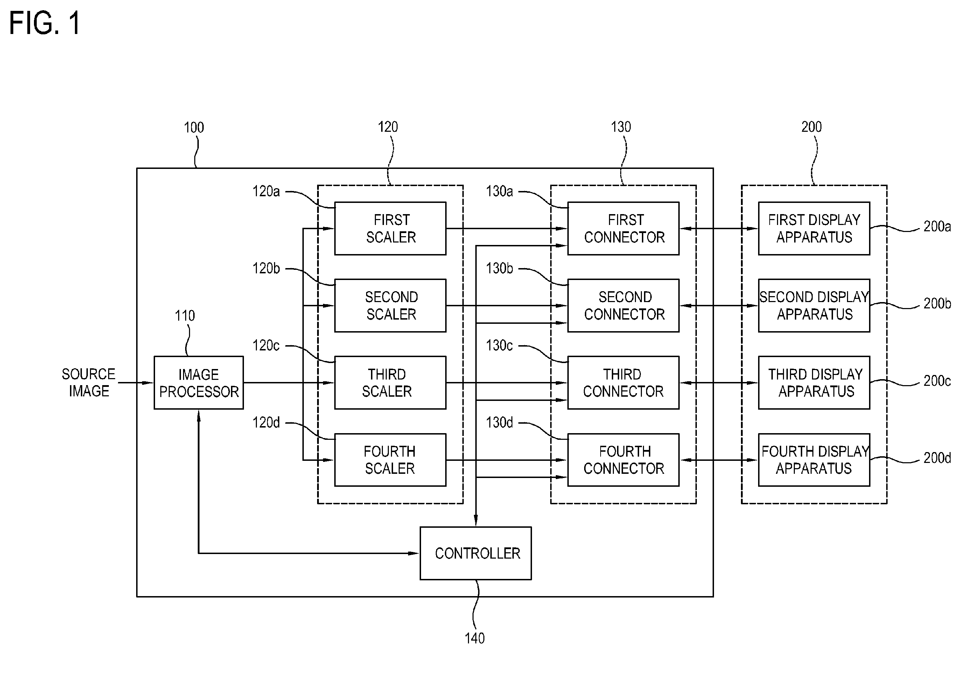

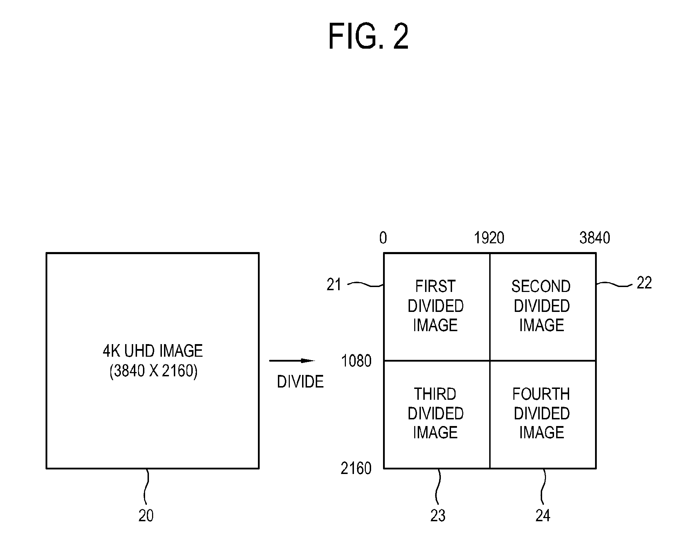

FIG. 1 is a block diagram of an exemplary image processing apparatus 100 according to an embodiment. FIG. 2 illustrates exemplary divided source images image according to the embodiment.

As illustrated in FIG. 1, the image processing apparatus 100 includes a receiver (not shown) to receive a source image, an image processor 110 that processes a source image signal received through the receiver, a plurality of scalers 120 that scale a source image processed by the image processor 110, a plurality of connectors 130 that are respectively connected to a plurality of external display apparatuses 200, and a controller 140 that controls elements, e.g., overall elements of the image processing apparatus 100.

The receiver transmits the received source image signal to the image processor 110, and may be implemented as various types corresponding, for example, to a standard of a received signal or an embodiment type of an image supply source. For example, the receiver may receive a signal/data according to a standards such as a high definition multimedia interface (HDMI), universal serial bus (USB), component, etc. and may include a plurality of connection terminals (not shown) corresponding to a respective one or more standards.

The receiver may receive a broadcasting signal including an image signal from a broadcasting station, a satellite, etc., and include a tuner to tune a channel of a received broadcasting signal.

The receiver may receive a source image with various resolutions, e.g., 2K (1,920 x 1,080), 4K (3,840 x 2,160), 8K (7,680 x 4,320), and/or panorama 4K (7,680 x 1,080).

The image processor 110 processes a source image including a broadcasting signal including an image signal transmitted by the receiver and an image signal supplied by an image supply source, according to preset various image processing operations. The image processor 110 outputs the processed image signal to the display apparatuses 200, on which a source image is displayed on the basis of the image signal.

Image processing operations of the image processor 110 according to an exemplary embodiment may include a demultiplexing operation for dividing a predetermined signal into signals by a nature of the signal, a decoding operation corresponding to an image format of an image signal, a de-interlacing operation for converting an interlace image signal into a progressive image signal, a noise reduction operation for improving an image quality, a detail enhancement operation, a frame refresh rate conversion operation, etc. The image processor 110 may include a decoder (not shown) to decode a source image corresponding to an image format of an encoded source image, and a frame buffer (not shown) to store the decoded source image by frame.

The image processor 110 divides a decoded source image corresponding to the number and state, e.g., corresponding to a supported resolution of the plurality of display apparatuses 200 connected to the plurality of connectors 130

For example, as illustrated in FIG. 2, if a source image 20 has a 4K resolution (3,840 x 2,160) and four display apparatuses 200 are connected to the plurality of connectors 130 and the display apparatuses 200 support a FHD resolution (1,920 x 1,080), the image processor 110 divides the 4K source image into a first divided image 21, a second divided image 22, a third divided image 23 and a fourth divided image 24.

The plurality of scalers 120 may be provided to correspond to the plurality of connectors 130, receive a divided source image from the image processor 110, and scale the source image to correspond with the resolution of the display apparatuses connected through the plurality of connectors 130.

For example, as illustrated in FIGS. 1 and 2, a first scaler 120a, a second scaler 120b, a third scaler 120c and a fourth scaler 120d receive the first divided image 21, second divided image 22, third divided image 23 and fourth divided image 24, respectively, and scale the images to correspond with a resolution, e.g., FHD (1920 x 1080) of the display apparatuses connected to the corresponding connectors 130.

The plurality of connectors 130 are connected to the plurality of external display apparatuses 200, and may include a plurality of connection ports in compliance with HDMI (high definition multimedia interface).

As illustrated in FIG. 1, information on the resolution of the first to fourth display apparatuses 200a, 200b, 200c and 200d may be transmitted by the first to fourth display apparatuses 200a, 200b, 200c and 200d connected through the first to fourth connectors 130a, 130b, 130c and 130d.

The first to fourth divided images that have been scaled by the first to fourth scalers 120a, 120b, 120c and 120d may be transmitted to the first to fourth display apparatuses 200a, 200b, 200c and 200d through the first to fourth connectors 130a, 130b, 130c and 130d.

The controller 140 controls elements of the image processing apparatus 100. The controller 140 controls the receiver, which receives a broadcasting signal, to tune a channel, controls the image processor 110 to process a source image including a broadcasting signal, and controls the plurality of scalers 120 to scale and transmit to the external display apparatuses the processed source image.

The controller 140 determines the number of display apparatuses 200 connected through the plurality of connectors 130, and determines information on the resolution of the display apparatuses 200 transmitted by the respective display apparatuses 200.

For example, as illustrated in FIG. 1, if the first connector 130a, second connector 130b, third connector 130c and fourth connector 130d are connected to the first display apparatus 200a, second display apparatus 200b, third display apparatus 200c and fourth display apparatus 200d, respectively, the controller 140 determines that the four display apparatuses 200 have been connected thereto.

The controller 140 receives the information on resolution supported by the first to fourth display apparatuses 200a, 200b, 200c and 200d through the first to fourth connectors 130a, 130b, 130c and 130d, and determines the information. For example, the controller 140 may determine that the first to fourth display apparatuses 200a, 200b, 200c and 200d support FHD (1,920 x 1,080) resolution. The first to fourth connectors 130a, 130b, 130c and 130d may be provided according to HDMI.

The controller 140 determines the resolution of the source image, and controls the image processor 110 to divide the source image taking into account the determined resolution of the source image and the number and resolution of the connected display apparatuses 200.

That is, the controller 140 determines the resolution of the source image, determines the number and resolution of the plurality of display apparatuses 200 connected by the plurality of connectors 130. If the resolution of the source image is higher than those of the plurality of display apparatuses 200, the controller 140 controls the image processor 110 to divide the source image corresponding to the number of the plurality of display apparatuses 200.

For example, as illustrated in FIG. 2, if the source image is 4K UHD (3,840 x 2,160), the number of connected display apparatuses is four display apparatuses and the resolution of the display apparatuses is FHD (1,920 x 1,080), the controller 140 may control the image processor 110 to divide the source image into four images.

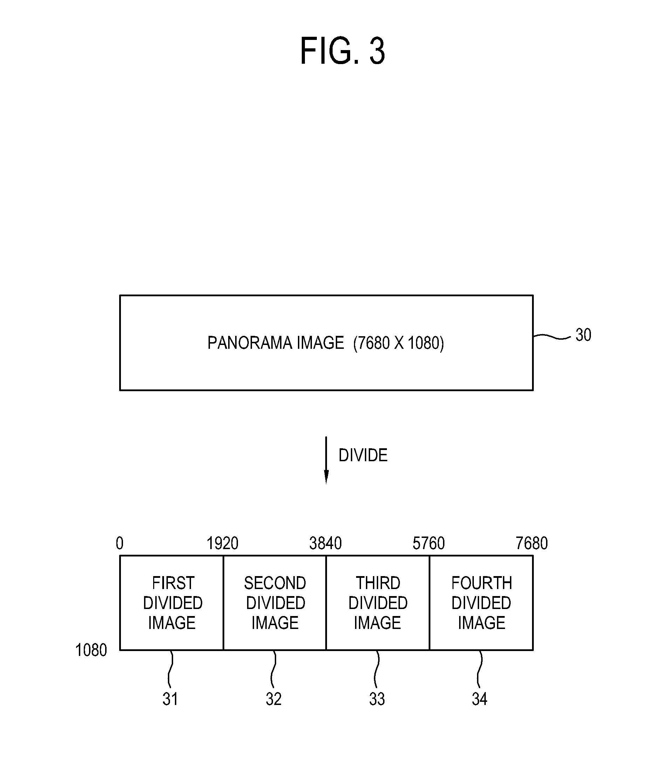

FIG. 3 illustrates exemplary divided images according to an embodiment.

As illustrated in FIG. 3, a controller, e.g., the controller 140 determines a resolution of a source image has a panorama 4K (7,680 x 1,080) resolution. The controller 140 determines the number and state, e.g., resolution of the plurality of display apparatuses 200 connected through the plurality of connectors 130.

For example, if the first to fourth display apparatuses with FHD resolution are connected through the first to fourth connectors, the controller 140 determines that four display apparatuses are connected, and determines that the resolution of the first to fourth display apparatuses is FHD (1,920 x 1,080).

As illustrated in FIG. 3, the controller 140 controls the image processor 110 to divide the source image with the panorama 4K (7,680 x 1,080) resolution into four images taking into account the resolution of the source image and the number and state of the plurality of display apparatuses.

The image processor 110 decodes the source image corresponding to an image format of the encoded source image, stores the decoded source image in a frame buffer, and divides the stored source image into four divided images, i.e., first to fourth divided images 31, 32, 33 and 34 as illustrated in FIG. 3.

The first to fourth scalers 120a, 120b, 120c and 120d receive the first to fourth divided images 31, 32, 33 and 34 from the image processor 110, and scale the first to fourth divided images 31, 32, 33 and 34 to correspond with the resolution of the first to fourth display apparatuses 200a, 200b, 200c and 200d connected through the corresponding connectors, i.e., the first to fourth connectors 130a, 130b, 130c and 130d.

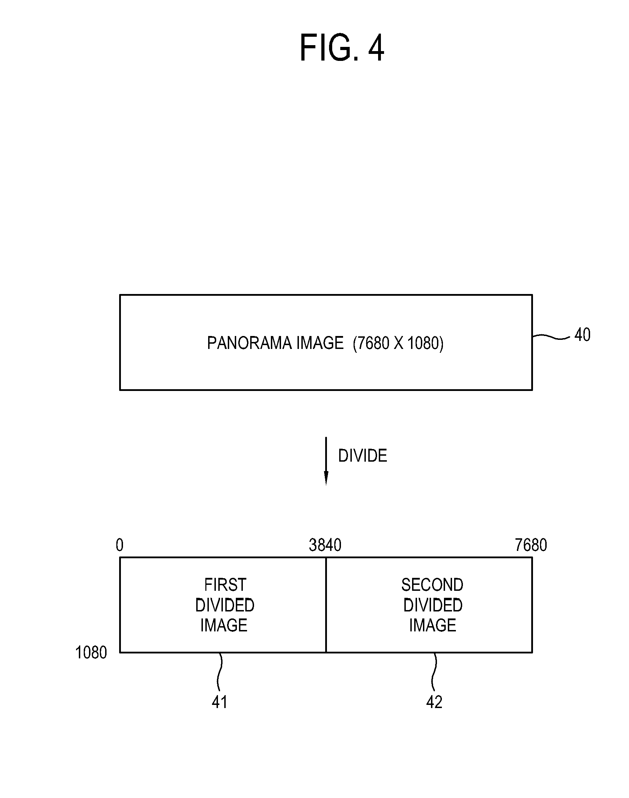

FIG. 4 illustrates divided images according to an embodiment.

As illustrated in FIG. 4, the controller 140 determines that the source image has a panorama 4K (7,680 x 1,080) resolution. The controller 140 determines the number and resolution of the plurality of display apparatuses 200 connected through the plurality of connectors 130.

For example, if first and second display apparatuses 200a and 200b with FHD resolution are connected through the first and second connectors 130a and 130b, the controller 140 determines that two display apparatuses are connected, and determines that the resolution of the first and second display apparatuses is FHD (1,920 x 1,080).

As illustrated in FIG. 4, the controller 140 controls the image processor 110 to divide the source image with the panorama 4K (7,680 x 1,080) resolution into two images taking into account the resolution of the source image and the number and resolution of the plurality of display apparatuses.

The image processor 110 decodes the source image corresponding to an image format of the encoded source image, stores the decoded source image in a frame buffer, and divides the stored source image into two divided images, i.e., first and second divided images 41 and 42 as illustrated in FIG. 4.

The first and second scalers 120a and 120b receive the first and second divided images 41 and 42 from the image processor 110, and scale the first and second divided images 41 and 42 to correspond with the resolution of the first and second display apparatuses 200a and 200b connected through the corresponding connectors, i.e., the first and second connectors 130a and 130b. The top and bottom of the screen may be displayed as a letter box corresponding to an aspect ratio of the display apparatuses.

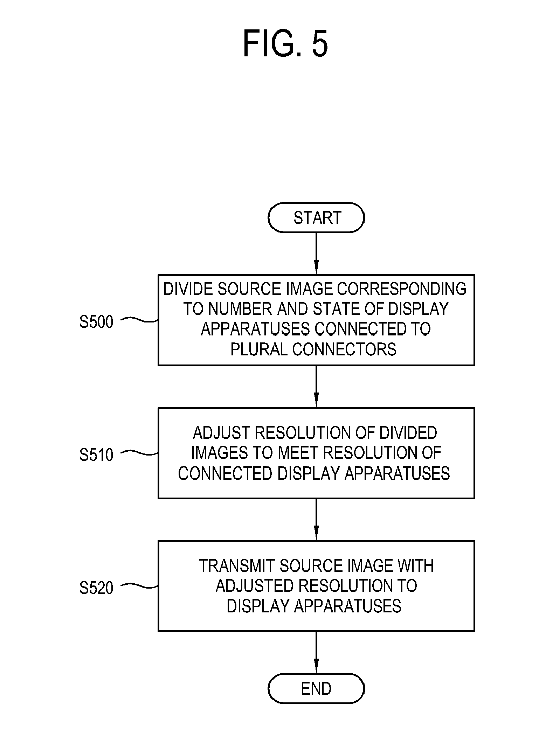

An exemplary control method of a image processing apparatus according to the embodiment will be described with reference to FIG. 5.

As illustrated in FIG. 5., at operation S500, the source image is divided, for example, by an image processor 110, with the division corresponding to a number and a state of the display apparatuses 200 connected to the plurality of connectors 120, by a control of the controller 140. If the resolution of the source image is higher than those of the plurality of display apparatuses 200, the controller 140 may control the image processor 110 to divide the source image corresponding to the number of the plurality of display apparatuses 200.

The division may include decoding the source image received by the receiver, by the image processor 110, storing the decoded source image in a frame buffer and dividing the source image by frames.

At operation S510, the resolution is scaled, for example, by the plurality of scalers 120 receiving the source image divided by the image processor 110, from the image processor 110, and scaling the resolution of the divided images to correspond with the resolution of the plurality of display apparatuses 200 connected to the plurality of connectors 130.

At operation S520, the source image having the adjusted resolution by the plurality of scalers 120 is transmitted to the plurality of display apparatuses 200 through the plurality of connectors 130.

As described above, an image processing apparatus and a control method thereof according to the embodiment processes a high-resolution source image to display the source image by a plurality of display apparatuses supporting a lower resolution than the resolution of the source image, without down-scaling the source image.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image processing apparatus comprising:
a plurality of connectors that are respectively connected to a plurality of display apparatuses having a predetermined resolution;
an image processor that divides a source image corresponding to a number of the plurality of display apparatuses connected through the connectors;
a plurality of scalers that are provided corresponding to the plurality of connectors respectively connected to the plurality of display apparatuses, and scales a resolution of the divided source image to correspond with the resolution of the corresponding display apparatuses; and
a controller that transmits the plurality of scaled source images to the plurality of display apparatuses.

2. The image processing apparatus according to claim 1, wherein the plurality of connectors comprises a high definition multimedia interface (HDMI).

3. The image processing apparatus according to claim 1, wherein the controller determines a resolution of the source image, determines the number and resolution of the plurality of display apparatuses connected through the connectors, and if the resolution of the source image is higher than those of the plurality of display apparatuses, controls the image processor to divide the source image corresponding to the number of the plurality of display apparatuses.

4. The image processing apparatus according to one of claims 1 to 3, wherein the resolution of the source image comprises UHD, and the plurality of source images with scaled resolution that is transmitted to the plurality of display apparatuses comprises FHD.

5. A control method of an image processing apparatus comprising:
dividing a source image corresponding to a number and a state of display apparatuses connected to a plurality of connectors;
scaling a resolution of the divided image to correspond with a resolution of the plurality of connected display apparatuses; and
transmitting the source image with the scaled resolution to the plurality of corresponding display apparatuses.

6. The control method according to claim 5, further comprising determining a resolution of the source image and determining the number and resolution of the display apparatuses connected to the plurality of connectors.

7. The control method according to claim 6, wherein if the resolution of the source image is higher than those of the plurality of display apparatuses, the source image is divided corresponding to the number of the plurality of display apparatuses.

8. The control method according to one of claims 5 to 7, wherein the plurality of connectors comprises HDMI.

9. The control method according to one of claims 5 to 8, further comprising decoding the source image.
